# EUROPÄISCHE PATENTSCHRIFT

(11) **EP 2 897 752 B1**
(45) Veröffentlichungstag und Bekanntmachung des Hinweises auf die Patenterteilung: **03.04.2019**
(21) Anmeldenummer: 13724847.2
(22) Anmeldetag: 24.05.2013
(51) Int. Cl.: B23C 5/10, B23C 5/20

(54) **SCHNEIDEINSATZ UND WERKZEUG ZUR SPANENDEN BEARBEITUNG EINES WERKSTÜCKS**
CUTTING INSERT AND TOOL FOR MACINING A WORKPIECE
INSERT DE COUPE ET OUTIL POUR USINAGE D'UNE PIÈCE

(30) Priorität: 18.09.2012 DE 102012108751
(43) Veröffentlichungstag der Anmeldung: 29.07.2015
(73) Patentinhaber: Hartmetall-Werkzeugfabrik Paul Horn GmbH, 72072 Tübingen (DE)
(72) Erfinder: STARK, Christian, 72108 Rottenburg-Hemmendorf (DE)
(74) Vertreter: Witte, Weller & Partner Patentanwälte mbB
(86) Internationale Anmeldenummer: PCT/EP2013/060766
(87) Internationale Veröffentlichungsnummer: WO 2014/044419

(56) Entgegenhaltungen:
- DE-U1- 29 912 025
- US-A1- 2012 195 700
- US-A1- 2013 039 798

## Beschreibung

Die vorliegende Erfindung betrifft einen Schneideinsatz, insbesondere einen Tangentialschneideinsatz, für ein Werkzeug zur spanenden Bearbeitung eines Werkstücks. Des Weiteren betrifft die vorliegende Erfindung ein Werkzeug zur spanenden Bearbeitung eines Werkstücks, insbesondere zum Tangentialfräsen, mit einem Werkzeughalter, welcher mindestens eine Schneideinsatzaufnahme aufweist, in der ein erfindungsgemäßer Schneideinsatz lösbar befestigt ist.

Schneideinsätze der vorliegenden Art, welche allgemein auch als Wendeschneidplatten oder im Speziellen als Tangentialschneideinsätze bezeichnet werden, kommen meist bei Anwendungen zur Metallbearbeitung, insbesondere bei Fräs- oder Drehanwendungen, zum Einsatz. Hauptsächlich werden die vorliegenden Schneideinsätze zum Tangentialfräsen eingesetzt. Fräswerkzeuge, bei denen derartige Schneideinsätze zum Einsatz kommen, umfassen typischerweise einen rotationssymmetrischen Werkzeughalter, an dem umfangsseitig zumindest eine, meist jedoch eine Vielzahl dieser Schneidsätze lösbar befestigt sind.

Das Abtragen von Material am Werkstück während des Fräsvorgangs wird durch hochpräzise Schneiden bzw. Schneidkanten, welche in die Schneideinsätze eingeformt sind, gewährleistet. Um den Verschleiß möglichst gering zu halten, den sehr hohen bei der Verarbeitung auftretenden Schnittkräften standzuhalten und eine möglichst hohe Präzision zu gewährleisten, werden diese Schneideinsätze zumeist aus Hartmetall hergestellt. Durch die hohe Materialbeanspruchung verschleißen die Schneidkanten dennoch im Laufe der Zeit. Insbesondere bei Fräsbearbeitungen, die eine hohe Präzision voraussetzen, müssen die Schneideinsätze daher nach einer gewissen Zeit ausgetauscht werden.

Um zu verhindern, dass die relativ teuren Schneideinsätze jedes Mal gesamthaft ausgetauscht werden müssen, wenn die Schneiden verschlissen sind, wurden mehrseitige Schneideinsätze entwickelt, welche mehrere symmetrisch zueinander angeordnete Schneiden aufweisen. Eine solche Wendeschneidplatte mit vier identischen, symmetrisch zueinander angeordneten Hauptschneiden ist beispielsweise aus der EP 1 572 407 B1 bekannt.

Die darin gezeigte Wendeschneidplatte ist bezüglich ihrer drei Hauptachsen jeweils 180° drehsymmetrisch ausgebildet. Sobald die verwendete Hauptschneidkante verschlissen ist, lässt sich die Wendeschneidplatte daher um 180° drehen und/oder wenden und in der neuen Position im Werkzeughalter befestigen. Beim Verschleiß einer der vier Hauptschneidkanten muss somit die Wendeschneidplatte nicht gesamthaft ausgetauscht werden, sondern nur im Halter gedreht bzw. gewendet werden, so dass die Bearbeitung mit den bisher nicht verwendeten, unverschlissenen Hauptschneidkanten fortgesetzt werden kann.

Aufgrund der Symmetrieeigenschaften der Wendeschneidplatte, bei der jede Hauptschneidkante die gleiche Schneidengeometrie aufweist, werden durch das Wenden bzw. Drehen der Wendeschneidplatte die Schnitteigenschaften nicht verändert. Mit anderen Worten lässt sich somit ein und dieselbe Wendeschneidplatte viermal verwenden, bis alle Schneidkanten verschlissen sind und die Wendeschneidplatte entsorgt werden muss.

Im Gegensatz zu einfachen, nicht wendbaren Schneideinsätzen bzw. Schneidplatten bieten derartige Wendeschneidplatten eine wesentlich höhere Flexibilität und können, dadurch dass sie mehrfach verwendbar sind, wesentlich länger verwendet werden, ohne dass dies mit Einbußen bei der Bearbeitungsgenauigkeit einhergeht. Wenngleich derartige vierschneidige Wendeschneidplatten deutlich komplexer in der Herstellung sind als herkömmliche, einschneidige (nicht wendbare) Schneidplatten, erweisen sich diese nicht nur als geschickter, sondern in der Gesamtbetrachtung auch als kostengünstiger für deren Abnehmer.

Aus Sicht des Herstellers solcher Wendeschneidplatten besteht die konstruktive Problematik jedoch nicht nur darin, die Symmetrieeigenschaften solcher Wendeschneidplatten mit mehreren identischen Schneiden zu realisieren, sondern gleichzeitig auch dafür zu sorgen, dass jede dieser Schneiden gleiche Bearbeitungseigenschaften aufweist und dadurch identisch verwendbar ist. Die größte Problematik besteht dabei oft darin, mögliche Kollisionen mit anderen Bauteilen der Schneidplatte oder des Werkzeughalters zu vermeiden und für einen sicheren Sitz der Schneidplatte in der Werkzeugaufnahme des Werkzeughalters zu sorgen, so dass eine optimale Krafteinleitung gewährleistet ist.

Insbesondere muss darauf geachtet werden, dass die zum jeweiligen Zeitpunkt nicht verwendeten Schneidkanten oder übrigen Bauteile der Schneidplatte nicht unerwünscht mit dem Werkstück kollidieren. Es darf also an Stellen der Schneidplatte, die für die spanende Bearbeitung des Werkstücks zum jeweiligen Zeitpunkt nicht verwendet werden sollen, nicht zu Kollisionen mit dem Werkstück kommen. Mit anderen Worten muss also darauf geachtet werden, dass die zum jeweiligen Zeitpunkt nicht verwendeten Schneidkanten freilaufen. Es erscheint einleuchtend, dass derartige Voraussetzungen bei Wendeschneidplatten mit mehreren, wechselweise verwendbaren Schneidkanten schwieriger zu realisieren sind, als dies bei herkömmlichen Schneidplatten mit nur einer Schneidkante der Fall ist.

Die oben erwähnten Symmetrieeigenschaften, der Freilauf der übrigen Schneidkanten sowie die Vermeidung von unerwünschten Kollisionen der Schneidplatte mit dem Werkstück wird bei der aus der EP 1 572 407 B1 bekannten Wendeschneidplatte dadurch gelöst, dass die Wendeschneidplatte zwei Teilkörper aufweist, welche gegenüber einander um eine Hauptachse der Wendeschneidplatte um einen vordefinierten Winkel verdreht sind. Die Hauptschneidkanten sind also gegenüber einander um einen vordefinierten Winkel verdreht. Auf diese Weise lassen sich die geforderten Symmetrie- und Freilaufeigenschaften technisch nachhaltig gewährleisten. Anderseits entstehen bei einer solchen in sich verdrehten Wendeschneidplatte relativ viele komplex geformte Flächen. Insbesondere an den Haupteinsatzflächen entstehen durch eine derartige Verdrehung relativ komplexe Spanflächen, welche technisch sehr anspruchsvoll zu fertigen sind. Eine derart anspruchsvolle Fertigung ist, selbst wenn diese technisch realisierbar sein sollte, mit sehr hohen Fertigungskosten verbunden. Dies führt im Endeffekt zu hohen Stückkosten der Wendeschneidplatten für die Ein Schneideinsatz gemäß dem Oberbegriff des Anspruchs 1 ist aus US 2012/0195700 A1 bekannt.

Der Erfindung liegt die Aufgabe zugrunde, einen Schneideinsatz der eingangs genannten Art bereitzustellen, der eine Alternative zu den oben genannten, aus dem Stand der Technik bekannten Wendeschneidplatten bietet und insbesondere einfacher herzustellen ist.

Diese Aufgabe wird, ausgehend von dem eingangs genannten Schneideinsatz, dadurch gelöst, dass der Schneideinsatz zwei identische einander gegenüberliegende Grundflächen aufweist, wobei zumindest ein Teil jeder Grundfläche planar und orthogonal zu einer z-Achse des Schneideinsatzes ist, und zwei identische einander gegenüberliegende Hauptseitenflächen aufweist, welche sich zwischen den zwei Grundflächen erstrecken, wobei zumindest ein Teil jeder Hauptseitenfläche planar und orthogonal zu einer x-Achse des Schneideinsatzes ausgerichtet ist, und zwei identische einander gegenüberliegende Nebenseitenflächen aufweist, welche sich ebenfalls zwischen den zwei Grundflächen erstrecken, wobei zumindest ein Teil jeder Nebenseitenfläche planar und orthogonal zu einer y-Achse des Schneideinsatzes ausgerichtet ist, wobei die x-, y- und die z-Achse orthogonal zueinander ausgerichtete Hauptachsen des Schneideinsatzes sind, wobei zwischen jeder Grundfläche und jeder Hauptseitenfläche jeweils eine geradlinig verlaufende Hauptschneide vorgesehen ist, und jede Hauptseitenfläche zwei diagonal gegenüberliegende erste Teilschneiden aufweist, welche jeweils an ein erstes Ende der jeweiligen Hauptschneide angrenzen, wobei die Hauptschneiden und die ersten Teilschneiden jeder Hauptseitenfläche jeweils in einer Schneidenebene liegen, welche orthogonal zur x-Achse verläuft, wobei die ersten Teilschneiden jeweils an einem an den Nebenseitenflächen vorgesehenen ersten Vorsprung ausgebildet sind, der einen ersten Freiwinkel definiert, wobei sich an jede erste Teilschneide eine geradlinig verlaufende Nebenschneide anschließt, welche am Übergang zwischen der jeweiligen Hauptseitenfläche und der jeweiligen Nebenseitenfläche angeordnet ist; und wobei jede geradlinig verlaufende Nebenschneide in der jeweiligen Schneidenebene mit einer Parallelen zur z-Achse einen zweiten Freiwinkel einschließt.

Die oben genannte Aufgabe wird dadurch vollständig gelöst.

Die Erfinder haben erkannt, dass es im Gegensatz zu den aus dem Stand der Technik bekannten Wendeschneidplatten mit vier identischen Schneiden auch möglich ist, die geforderten Symmetrie- und Freilaufeigenschaften auch ohne eine Verdrehung des Schneideinsatzes in sich um eine seiner Hauptachsen zu gewährleisten. Der erfindungsgemäße Schneideinsatz gewährleistet wie auch die aus dem Stand der Technik bekannten Schneidsätze, dass alle vorgesehenen Schneiden identisch verwendbar sind, ohne dass sich dabei etwas an den Schnitteigenschaften bei der Bearbeitung verändert.

Der erfindungsgemäße Schneideinsatz weist also vorzugsweise genau vier identische Hauptschneiden auf. Anders als bei dem aus der EP 1 572 407 B1 bekannten Schneideinsatz werden die für die Freilauf- und optimalen Zerspanungseigenschaften notwendigen Freiwinkel nicht durch eine Verdrehung des Schneideinsatzes in sich bzw. eine Verdrehung der Hauptschneiden gegenüber einander um die z-Achse erreicht, sondern durch an den Nebenseitenflächen vorgesehene Vorsprünge realisiert, in welche die erforderlichen Freiwinkel integriert sind. Dass die Vorsprünge einen Freiwinkel definieren ist also dahingehend zu verstehen, dass durch die Vorsprünge jeweils mindestens ein Freiwinkel erzeugt wird bzw. entsteht.

Die Hauptschneiden und die (ersten) Teilschneiden jeder Hauptseitenfläche liegen im Gegensatz zu den aus dem Stand der Technik bekannten Schneideinsätzen jeweils in einer gemeinsamen Schneidenebene. Da der erfindungsgemäße Schneideinsatz insgesamt zwei Hauptseitenflächen mit jeweils zwei Hauptschneiden aufweist, liegen die beiden Hauptschneiden der ersten Hauptseitenfläche in einer gemeinsamen ersten Schneidenebene und die beiden Hauptschneiden der zweiten Hauptseitenfläche in einer zweiten Schneidenebene, welche parallel dazu verläuft. Genauso liegen die an jeder Hauptseitenfläche angeordneten ersten Teilschneiden ebenso in diesen Schneidenebenen, das heißt die ersten Teilschneiden der ersten Hauptseitenfläche liegen gemeinsam mit den Hauptschneiden der ersten Hauptseitenfläche in einer Ebene (erste Schneidenebene) und die ersten Teilschneiden der zweiten Hauptseitenfläche liegen mit den Hauptschneiden der zweiten Hauptseitenfläche ebenfalls in einer Ebene (zweite Schneidenebene).

Bei diesen "Schneidenebenen" handelt es sich um gedachte/imaginäre Ebenen, welche nicht tatsächlich, körperlich vorhanden sind. Diese gedachten Schneidenebenen sind vorliegend orthogonal zur x-Achse ausgerichtet. Die Hauptschneiden und die ersten Teilschneiden jeder Hauptseitenfläche sind also in x-Richtung nicht versetzt zueinander. Gemäß einer bevorzugten Ausgestaltung der Erfindung sind die ersten Teilschneiden als Eckenradien oder Fasen ausgestaltet.

Wie oben bereits erwähnt, ist ein wesentliches Merkmal des erfindungsgemäßen Schneideinsatzes darin zu sehen, dass jeweils zwei sogenannte erste Vorsprünge an den Nebenseitenflächen angeordnet sind. In diese ersten Vorsprünge sind die für die während der Bearbeitung geforderten Freilaufeigenschaften des Schneideinsatzes notwendigen Freiwinkel eingeformt. Dadurch können die Hauptschneiden, im Gegensatz zu den aus dem Stand der Technik bekannten Wendeschneidplatten, parallel zueinander verlaufen. Die Bezeichnung "erste Vorsprünge" ist dabei lediglich als Name oder Definition für gleich geformte bzw. gleich große Vorsprünge anzusehen.

Erfindungsgemäß weist jede der beiden Nebenseitenflächen jeweils zwei erste Vorsprünge auf, welche in zwei diagonal gegenüberliegenden Ecken der Nebenseitenfläche angeordnet sind. Diese ersten Vorsprünge können aufgrund ihrer Form auch als Nasen bezeichnet werden, da sie bezüglich der y-Achse aus den jeweiligen Nebenseitenflächen hervorstehen. Sie sind in den Ecken an den Übergängen zwischen den drei Hauptflächen, das heißt zwischen Grundfläche, Hauptseitenfläche und Nebenseitenfläche angeordnet. Ein jeweiliges Ende der ersten Vorsprünge grenzt somit an jeweils eine der ersten Teilschneiden an bzw. geht in diese über. Die ersten Teilschneiden schließen sich, wie bereits erwähnt, jeweils an ein Ende der jeweiligen Hauptschneide an. Jede der ersten Teilschneiden ist vorzugsweise als Radius oder Fase bzw. als Eckenradius oder Eckenfase ausgestaltet.. An dem genannten Ende der jeweiligen Hauptschneide entsteht somit keine spitz zulaufende Ecke bzw. Eckenkante, sondern eine bogenförmige, abgerundete oder abgeflachte Kante. Da das Werkstück auch mit diesen Eckenradien oder Eckenfasen spannend bearbeitet werden kann, werden diese vorliegend allgemein als erste Teilschneiden bezeichnet. Die Bezeichnung "erste Teilschneiden" ist dabei lediglich als Name oder Definition für gleich geformte bzw. gleich große Teilschneiden anzusehen und impliziert nicht deren Anzahl.

Der oben genannte erste Freiwinkel ist ein Winkel, welcher die durch den ersten Vorsprung definierte Freifläche mit einer Parallelen zur x-Achse einschließt. Der erste Freiwinkel verhindert somit jeweils eine Kollision der übrigen während der Bearbeitung nicht verwendeten Schneidkanten bzw. der Nebenseitenfläche mit dem Werkstück. Erfindungsgemäß ist dieser erste Freiwinkel im Bereich von 1° bis 10°, vorzugsweise im Bereich von 3 bis 4°. In einer konkreten Ausgestaltung des erfindungsgemäßen Schneideinsatzes wurde der erste Freiwinkel beispielsweise mit einer Größe von 3,71° vorgesehen.

Auf der einen Seite ist ein möglichst großer erster Freiwinkel wünschenswert, da der Schneideinsatz in diesem Fall nur um einen relativ geringen Axialwinkel im Plattensitz des Werkzeughalters verdreht angeordnet werden muss. Ein geringer Axialwinkel hat wiederum den Vorteil, dass die während der Zerspanung am Werkstück entstehende Konturabweichung (Abweichung der am Werkstück entstehenden Schnittkontur von der Schneidenkontur des Schneideinsatzes) relativ gering ist. Andererseits ist die Größe des ersten Freiwinkels nach oben hin begrenzt, da ein zu hoher negativziehender Schnitt vermieden werden sollte, da dies die Zerspanungseigenschaften negativ beeinflussen würde. Von einem sogenannten negativ-ziehenden Schnitt spricht man, wenn die Spanabfuhr über die Spanfläche in Richtung zum abnehmenden Material hin (in Richtung zu der bei der Verarbeitung entstehenden Nutwand hin) erfolgt.

Durch die an den Nebenseitenflächen vorgesehenen jeweiligen zwei ersten Vorsprünge, in welche die Freiwinkel integriert sind, ist es also gelungen, die Symmetrieeigenschaften des Schneideinsatzes zu bewahren und dennoch die Freilaufeigenschaften zu gewährleisten (obwohl die Hauptschneiden parallel zueinander angeordnet sind).

Um von der Bearbeitung mit einer Hauptschneide zu einer Bearbeitung mit der nächsten Hauptschneide zu wechseln, muss der Schneideinsatz lediglich vom Werkzeughalter gelöst werden und dann entweder um 180° um die z-Achse gedreht bzw. um 180° um die x-Achse gewendet werden. Der erfindungsgemäße Schneideinsatz ist also vorzugsweise sowohl um die x-Achse, als auch um die y-Achse und um die z-Achse 180° drehsymmetrisch.

An dieser Stelle ist festzuhalten, dass im Sinne der Erfindung "180° drehsymmetrisch" bedeutet, dass sich der Schneideinsatz bei Rotation um 180° um eine seiner Hauptachsen (x-, y- oder z-Achse) auf sich selbst abbildet. Die x-Achse, die y-Achse und die z-Achse bilden somit die Hauptachsen des Schneideinsatzes, welche gleichzeitig als Symmetrieachsen anzusehen sind.

Des Weiteren sei angemerkt, dass unter "Grundfläche", "Hauptseitenfläche", "Nebenseitenfläche" die jeweiligen Hauptseiten des Schneideinsatzes zu verstehen sind, allerdings nicht zwingend notwendigerweise rein planare Flächen. Jede Grund-, Hauptseiten- und Nebenseitenfläche bildet also eine der sechs räumlichen Seiten des Schneideinsatzes und kann jeweils aus mehreren, in verschiedenen Ebenen liegenden planaren, gekrümmten oder aber auch gewölbten Teilflächen zusammengesetzt sein. Erfindungsgemäß ist lediglich immer nur ein Teil dieser Flächen planar und senkrecht zu einer der drei Hauptachsen ausgestaltet. Wiederum ein Teil dieser planar und orthogonal zu den Hauptachsen ausgestalteten Teilflächen der Grund-, Hauptseiten- bzw. Nebenseitenflächen kann als Anlagefläche am Werkzeughalter verwendet werden.

Da die Hauptschneiden parallel zueinander ausgestaltet sind, also nicht wie im Stand der Technik verdreht zueinander angeordnet sind, lassen sich die genannten planaren Flächen an jeder dieser Seitenflächen relativ einfach ausgestalten. Im Gegensatz zu den aus dem Stand der Technik bekannten Schneideinsätzen lässt sich der erfindungsgemäße Schneideinsatz dadurch relativ einfach fertigen. Die Anzahl der nachträglich einzuschleifenden komplex geformten Flächen ist um ein Vielfaches reduziert. Auch der Plattensitz lässt sich einfacher und mechanisch stabiler gestalten, als dies bei den aus dem Stand der Technik bekannten Schneideinsätzen der Fall ist. Dies schlägt sich natürlich auch in Bezug auf die Kosten für die Abnehmer derartiger Schneideinsätze in positivem Maße nieder.

Jede der vier Hauptschneiden geht an einem ihrer Enden (bezeichnet als erstes Ende) in eine erste Teilschneide über, wobei diese erste Teilschneide wiederum jeweils in eine geradlinig verlaufende Nebenschneide übergeht. Die erste Teilschneide kann jeweils bogenförmig (als Eckenradius) ausgestaltet sein. Sie ist an zwei diagonal gegenüberliegenden Ecken der jeweiligen Hauptseitenfläche angeordnet. Die daran jeweils anschließende Nebenschneide verläuft am Übergang zwischen der jeweiligen Hauptseitenfläche und der jeweiligen Nebenseitenfläche. Auch diese Nebenschneide ist genauso wie die erste Teilschneide jeweils an einem der ersten Vorsprünge angeordnet. Jeder an den Nebenseitenflächen angeordnete erste Vorsprung geht an der Grenze zwischen Nebenseitenfläche und Hauptseitenfläche somit in eine erste Teilschneide und eine geradlinige Nebenschneide über. Die geradlinigen Nebenschneiden werden aufgrund ihrer Anordnung auch als Planschneiden bezeichnet.

Jede dieser geradlinig verlaufenden Nebenschneide schließt in der jeweiligen Schneidenebene mit einer Parallelen zur z-Achse einen zweiten Freiwinkel ein. Dieser zweite Freiwinkel ist insbesondere notwendig, da beim Tangentialfräsen das Werkstück nicht nur an der Hauptschneide bearbeitet wird, sondern über die durch die erste Teilschneide und die Nebenschneide gebildete Ecke sozusagen hinüber geschnitten wird. Genauer gesagt wird bis zum tangentialen Übergang zwischen der ersten Teilschneide und der daran angrenzenden Nebenschneide geschnitten. Aufgrund der beschriebenen Freiwinkel läuft die Nebenschneide dabei frei. Das Werkstück wird daher speziell beim Tangentialnutfräsen nicht nur im Nutgrund, sondern gleichzeitig auch an der Nutwand spanend bearbeitet.

Der oben genannte zweite Freiwinkel wird vorliegend ähnlich wie auch der erste Freiwinkel durch den ersten Vorsprung gebildet. Der zweite Freiwinkel ist also mit anderen Worten ebenso wie der erste Freiwinkel jeweils in einen der ersten Vorsprünge eingeformt.

Bezüglich der zweiten Freiwinkel sei noch erwähnt, dass auch diese vorzugsweise ein Größe von 1° bis 10° aufweisen, insbesondere zwischen 1° und 5°. In einem konkreten Ausführungsbeispiel des erfindungsgemäßen Schneideinsatzes wurde ein Winkel von 3,25° definiert. Dieser Freiwinkel genügt, um beim Tangentialfräsen über die Ecken des Schneideinsatzes darüber zu schneiden.

In einer Ausgestaltung der vorliegenden Erfindung weist jede Hauptseitenfläche ferner zwei diagonal gegenüberliegende zweite Teilschneiden auf, welche jeweils an ein zweites Ende der jeweiligen Hauptschneide angrenzen und jeweils an einem an den Nebenseitenflächen vorgesehenen zweiten Vorsprung ausgebildet sind, der einen dritten Freiwinkel definiert.

In dieser Ausgestaltung geht also jede Hauptschneide jeweils an ihrem ersten Ende jeweils in eine erste Teilschneide über und an ihrem zweiten (anderen) Ende in eine zweite Teilschneide über. Die Bezeichnungen "erste Teilschneide" bzw. "zweite Teilschneide" beziehen sich nicht auf die Anzahl der Teilschneiden, sondern werden lediglich zur Differenzierung der einzelnen Arten von Teilschneiden verwendet. Jeder Hauptschneide sind also jeweils eine erste Teilschneide (am ersten Ende) und eine zweite Teilschneide (am zweiten Ende) zugeordnet. Insgesamt weist der Schneideinsatz in dieser Ausgestaltung vier erste Teilschneiden und vier zweite Teilschneiden auf, also zwei erste und zwei zweite Teilschneiden pro Hauptseitenfläche. Die ersten und die zweiten Teilschneiden sind dabei jeweils in den vier Ecken jeder Hauptseitenfläche angeordnet. Die zweiten Teilschneiden sind vorzugsweise ebenso als Eckenradien oder Eckenfasen ausgestaltet.

Vorzugsweise sind die zweiten Vorsprünge kleiner ausgestaltet als die ersten Vorsprünge. Die Gründe hierfür liegen wiederum in den einzuhaltenden Freilaufeigenschaften, also um Kollisionen zu vermeiden. Je nach Fräsanwendung kann mit dem Schneideinsatz gemäß dieser Ausgestaltung somit also über beide Ecken geschnitten werden bzw. bei Tangentialnutfräswerkzeugen, bei denen mehrere Schneideinsätze axial versetzt zueinander angeordnet sind, drückt die jeweils zurückgezogene Ecke mit der zweiten Teilschneide nicht ungewollt gegen das Werkstück. Dies reduziert den entstehenden Freiflächenverschleiß.

Die ersten Teilschneiden sind also an den ersten Vorsprüngen (erste Art von Vorsprüngen) ausgebildet und die zweiten Teilschneiden an den zweiten Vorsprüngen (zweite Art von Vorsprüngen).

Gemäß einer weiteren bevorzugten Ausgestaltung weist jede Hauptseitenfläche eine Hauptanlagefläche auf, welche orthogonal zu der x-Achse des Schneideinsatzes ausgerichtet ist und gegenüber der jeweiligen Schneidenebene in Richtung der x-Achse nach innen zur geometrischen Mitte des Schneideinsatzes versetzt ist. Diese Hauptanlagefläche stellt eine der Anlageflächen dar, mit welcher der Schneideinsatz in der Schneideinsatzaufnahme am Werkzeughalter anliegt. Diese Hauptanlagefläche ist vorzugsweise eine planare Fläche, welche orthogonal zur x-Achse ausgerichtet ist. Wie bereits erwähnt, ist diese planare Fläche von der gedachten Schneidenebene nach innen entlang der x-Achse versetzt. Die Hauptschneiden, die ersten und zweiten Teilschneiden und die Nebenschneiden stehen also von der an der jeweiligen Hauptseitenfläche angeordneten Hauptanlagefläche hervor.

Jede Hauptseitenfläche weist vorzugsweise zudem zwei Spanflächen auf, welche sich zwischen den Hauptschneiden und der Hauptanlagefläche erstrecken und quer zur x-Achse ausgerichtet sind. Die Hauptschneiden gehen also über schräg zur x-Achse ausgerichtete, jeweils planar ausgestaltete Spanflächen in die Hauptanlageflächen über. An diesen Spanflächen kann der an den Hauptschneiden entstehende Span abfließen.

Gemäß einer weiteren Ausgestaltung der vorliegenden Erfindung weist jede Nebenseitenfläche eine Nebenanlagefläche auf, welche orthogonal zu der y-Achse des Schneideinsatzes verläuft und gegenüber den an der jeweiligen Nebenseitenfläche vorgesehenen ersten Vorsprüngen in Richtung der y-Achse nach innen zur geometrischen Mitte des Schneideinsatzes versetzt ist.

Vorzugsweise weist der erfindungsgemäße Schneideinsatz somit zwei sich gegenüberliegende Hauptanlageflächen und zwei sich ebenfalls gegenüberliegende Nebenanlageflächen auf. In montiertem Zustand liegt der Schneideinsatz vorzugsweise auf einer seiner Grundflächen auf dem Grund des Plattensitzes auf und zudem jeweils an einer Hauptanlagefläche und einer Nebenanlagefläche am Werkzeughalter an. Aufgrund dessen, dass der erfindungsgemäße Schneideinsatz nicht wie die aus dem Stand der Technik bekannten Schneideinsätze in sich verdreht ist, lassen sich diese Hauptanlageflächen und Nebenanlageflächen relativ einfach vorsehen, ohne dass diese in komplizierten Verfahren in den Schneideinsatzkörper eingeschliffen werden müssen.

Des Weiteren weist der erfindungsgemäße Schneideinsatz vorzugsweise eine Durchgangsbohrung auf, welche orthogonal zu den beiden Grundflächen verläuft und diese durchbricht. Diese Durchgangsbohrung dient im Wesentlichen der Befestigung des Schneideinsatzes im Werkzeughalter. Dazu wird vorzugsweise ein Befestigungsmittel, insbesondere eine Schraube, durch diese Durchgangsbohrung hindurchgeführt und am Werkzeughalter befestigt.

Da sich die vorliegende Erfindung nicht nur auf den Schneideinsatz selbst, sondern auch auf das Werkzeug bezieht, bei dem dieser Schneideinsatz Anwendung findet, sei abschließend diesbezüglich noch Folgendes erwähnt. Der in der Schneideinsatzaufnahme des Werkzeughalters eingesetzte Schneideinsatz ist gemäß der vorliegenden Erfindung derart um eine Radialrichtung des Werkzeughalters um einen definierten Schneidenverdrehwinkel verdreht angeordnet, dass die zur Bearbeitung verwendete Hauptschneide ihren Schneidenverdrehwinkel mit einer Ebene einschließt, welche durch die Radialrichtung und eine Drehachse des Werkzeughalters definiert ist. Die zur Bearbeitung verwendete Hauptschneide wird also, anders ausgedrückt, gegenüber der Bearbeitungs- bzw. Rotationsrichtung des Fräswerkzeugs leicht gedreht angeordnet. Dadurch entsteht der Schneidenverdrehwinkel, welcher aufgrund seiner Anordnung auch als Axialwinkel bezeichnet wird.

Die Drehung der Wendeschneidplatte bzw. des Schneideinsatzes innerhalb des Werkzeughalters hat im Wesentlichen den Zweck, Kollisionen mit den nicht verwendeten Schneidkanten bzw. auch Kollisionen mit den oben beschriebenen ersten und zweiten Vorsprüngen zu vermeiden.

Ohne die oben beschriebenen vorgesehenen Freiwinkel, insbesondere ohne den oben beschriebenen ersten Freiwinkel, müsste der Axialwinkel bzw. der Schneidenverdrehwinkel wesentlich größer gewählt werden. Bei einem wie bei dem vorliegenden Schneideinsatz entstehenden negativ-ziehenden Schnitt wäre dies jedoch von Nachteil für die Schnitteigenschaften. Da erfindungsgemäß jedoch beispielsweise ein Freiwinkel von 3,71° gewählt wird, genügt bereits ein Axialwinkel bzw. Schneidenverdrehwinkel von 1°, um Kollisionen zu vermeiden. Grundsätzlich wären jedoch auch andere Axialwinkel, beispielsweise von 0,1° -10° denkbar. Ein möglichst geringer Axialwinkel ist jedoch von Vorteil, um die am Werkstück entstehende Konturabweichung möglichst gering zu halten.

Ein weiterer Grund für den vorgesehenen Axialwinkel besteht darin, eine senkrechte Krafteinwirkung zu vermeiden und eine optimale Spanbildung bzw. Spanabfuhr zu gewährleisten.

An dieser Stelle sei angemerkt, dass die Verwendung der erfindungsgemäßen Wendeschneidplatte vorwiegend hauptsächlich am Beispiel eines Tangentialnutfräswerkzeugs beschrieben ist. Die erfindungsgemäße Wendeschneidplatte lässt sich jedoch ebenso auch in Schaftfräsern oder in einem Drehhalter verwenden. Die erfindungsgemäße Wendeschneidplatte ist daher nicht auf die vorliegend beschriebene Anwendung beschränkt.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Es zeigen:
- Fig. 1: eine perspektivische Ansicht einer ersten Ausführungsform des erfindungsgemäßen Schneideinsatzes,
- Fig. 2: eine Draufsicht der ersten Ausführungsform des erfindungsgemäßen Schneideinsatzes von oben,
- Fig. 3: eine Draufsicht der ersten Ausführungsform des erfindungsgemäßen Schneideinsatzes von vorne,
- Fig. 4: eine weitere Draufsicht der ersten Ausführungsform des erfindungsgemäßen Schneideinsatzes von der Seite,
- Fig. 5: eine Schnittansicht der ersten Ausführungsform des erfindungsgemäßen Schneideinsatzes (Schnitt B-B aus Fig. 2),
- Fig. 6: eine weitere Schnittansicht der ersten Ausführungsform des erfindungsgemäßen Schneideinsatzes (Schnitt A-A aus Fig. 2),
- Fig. 7: eine perspektivische Ansicht einer zweiten Ausführungsform des erfindungsgemäßen Schneideinsatzes,
- Fig. 8: eine Draufsicht der zweiten Ausführungsform des erfindungsgemäßen Schneideinsatzes von oben,
- Fig. 9: eine Draufsicht der zweiten Ausführungsform des erfindungsgemäßen Schneideinsatzes von vorne,
- Fig. 10: eine weitere Draufsicht der zweiten Ausführungsform des erfindungsgemäßen Schneideinsatzes von der Seite,
- Fig. 11: eine Schnittansicht der zweiten Ausführungsform des erfindungsgemäßen Schneideinsatzes (Schnitt B-B aus Fig. 8),
- Fig. 12: eine weitere Schnittansicht der zweiten Ausführungsform des erfindungsgemäßen Schneideinsatzes (Schnitt A-A aus Fig. 8),
- Fig. 13: eine perspektivische Ansicht eines erfindungsgemäßen Werkzeughalters ohne den darin eingesetzten erfindungsgemäßen Schneideinsatz,
- Fig. 14: eine perspektivische Ansicht des erfindungsgemäßen Werkzeughalters mit darin eingesetztem Schneideinsatz,
- Fig. 15: eine seitliche Draufsicht des erfindungsgemäßen Werkzeughalters mit eingesetztem Schneideinsatz,
- Fig. 16: eine weitere seitliche Draufsicht des erfindungsgemäßen Werkzeughalters mit eingesetztem Schneideinsatz, und
- Fig. 17: eine Schnittansicht des erfindungsgemäßen Werkzeughalters mit eingesetztem Schneideinsatz (Schnitt A-A aus Fig. 16).

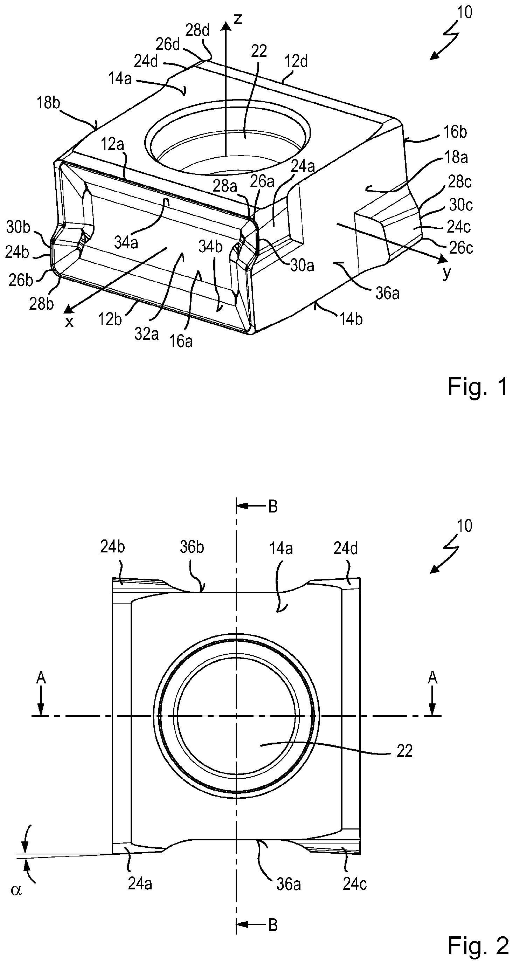

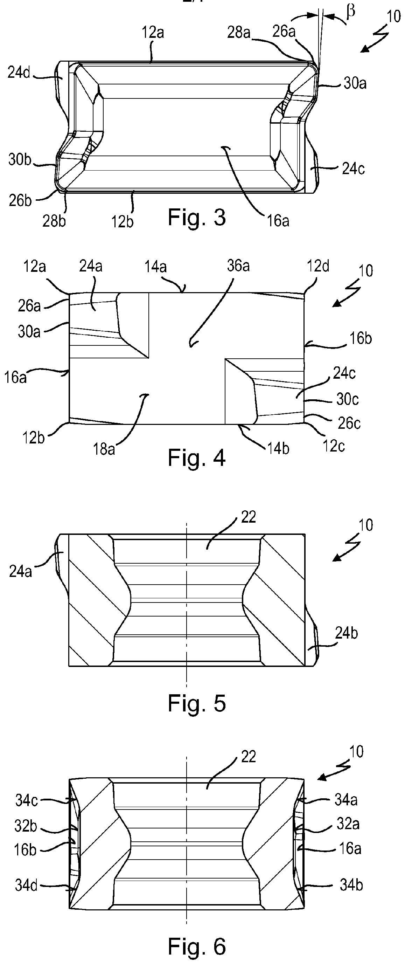

Die Fig. 1 bis 6 zeigen eine erste Ausführungsform des erfindungsgemäßen Schneideinsatzes in verschiedenen Ansichten, wobei der Schneideinsatz gesamthaft mit der Bezugsziffer 10 gekennzeichnet ist. Aus der in Fig. 1 dargestellten perspektivischen Ansicht wird ersichtlich, dass es sich hierbei um eine vierschneidige Wendeschneidplatte 10 handelt, mit vier identischen, geradlinig verlaufenden Hauptschneiden 12a-d (Hauptschneide 12c ist in Fig. 1 verdeckt dargestellt, siehe dazu z.B. Fig. 4).

Aufgrund seines Haupteinsatzzweckes, nämlich das Tangentialfräsen bzw. Tangentialnutfräsen, wird diese Art von Schneideinsatz 10 auch als Tangentialschneideinsatz bezeichnet. Gesamthaft betrachtet ist der Schneideinsatz 10 im Wesentlichen quaderförmig, wobei an manchen Stellen von der quaderförmigen Form abgewichen wird. Die äußere Form des Schneideinsatzkörpers wird durch sechs Flächen begrenzt: zwei Grundflächen 14a, b, zwei Hauptseitenflächen 16a, b und zwei Nebenseitenflächen 18a, b. Es versteht sich, dass aufgrund der perspektivischen Ansicht ein Teil der Flächen (Flächen 14b, 16b und 18b) in Fig. 1 verdeckt sind.

Des Weiteren sei hierbei angemerkt, dass mit den als Grundfläche 14a, b, Hauptseitenfläche 16a, 16b und Nebenseitenfläche 18a, b bezeichneten Flächen jeweils keine rein planaren, in einer Ebene liegenden Flächen gemeint sind, sondern die den Körper des Schneideinsatzes 10 begrenzenden Hauptseiten. Jede dieser Flächen 14a, b, 16a, b, 18a, b setzt sich somit aus mehreren, teilweise planaren Flächen zusammen. Jeweils ein Teil dieser Flächen 14a, b, 16a, b, 18a, b verläuft jeweils senkrecht zu einer der Hauptachsen des Schneideinsatzes 10, welche als x-, y- und z-Achse bezeichnet sind. Jeweils ein Teil der identischen einander gegenüberliegenden Grundflächen 14a, b verläuft orthogonal zu der z-Achse des Schneideinsatzes 10. Ein Teil der ebenfalls identischen einander gegenüberliegenden Hauptseitenflächen 16a, b verläuft orthogonal zu der x-Achse des Schneideinsatzes 10; und jeweils ein Teil der ebenfalls identischen einander gegenüberliegenden Nebenseitenflächen 18a, b verläuft orthogonal zu der y-Achse des Schneideinsatzes 10.

Insgesamt handelt es sich bei dem hier vorgestellten Schneideinsatz 10 also um eine Wendeschneidplatte, welche um jede ihrer drei Hauptachsen (x-, y- und z-Achse) 180° drehsymmetrisch ist. Bei einer Drehung um 180° um eine dieser Achsen bildet sich der Schneideinsatz 10 also wiederum auf sich selbst ab. Die x-, y- und z-Achse können somit auch als Symmetrieachsen des Schneideinsatzes 10 bezeichnet werden, welche im geometrischen Mittelpunkt des Schneideinsatzes 10 zusammenlaufen. Aufgrund dieser Symmetrieeigenschaften lässt sich der Schneideinsatz 10 in vier verschiedenen Positionen im Werkzeughalter einsetzen, ohne dass es dabei zu einer Veränderung der Schnittgeometrie oder der Schnitteigenschaften kommt. Beispielsweise ließe sich zunächst die Hauptschneide 12a zur spanabhebenden Bearbeitung verwenden. Sobald diese verschlissen ist, kann der Schneideinsatz 10 um 180° um die x-Achse gewendet werden, so dass dann die Hauptschneide 12b zum Einsatz kommt. Um dann die beiden Hauptschneiden 12c und 12d zum Einsatz kommen zu lassen, muss der Schneideinsatz 10 wiederum nur um 180° um die z-Achse gedreht bzw. nochmals um 180° um die x-Achse gewendet werden. Es versteht sich, dass der Schneideinsatz 10 dazu jeweils vom Werkzeughalter gelöst und in seiner neuen Position erneut befestigt werden muss.

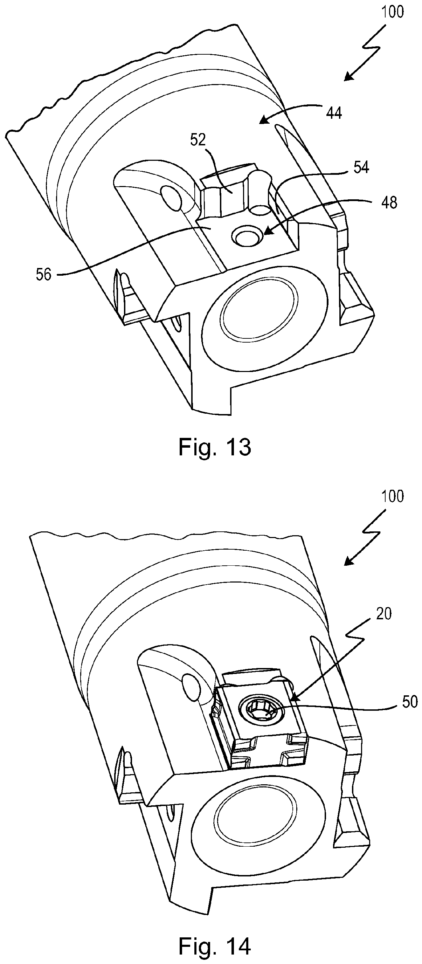

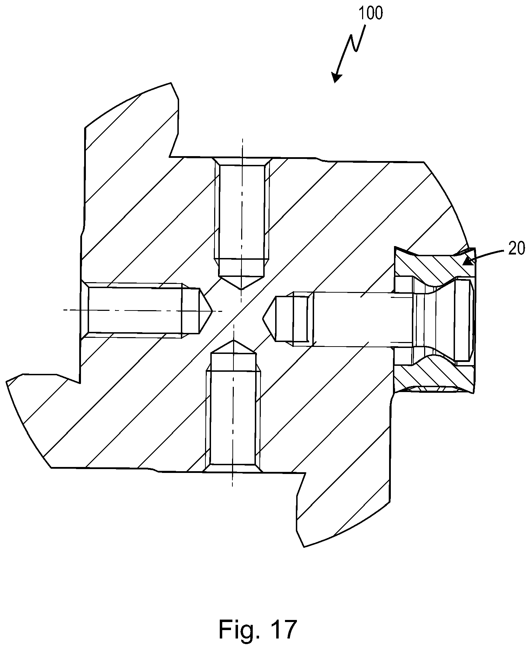

Die Befestigung des Schneideinsatzes 10 am Werkzeughalter geschieht vorzugsweise durch ein Befestigungselement, beispielsweise durch eine Schraube 50, wie dies aus den Fig. 13 bis 17 ersichtlich ist, auf die weiter unten noch näher eingegangen wird. Diese Schraube 50 lässt sich dazu in die mittig in den Schneideinsatz eingebrachte Durchgangsbohrung 22 einsetzen. Die Durchgangsbohrung 22 verläuft vorzugsweise orthogonal zu den beiden Grundflächen 14a, b, also entlang der z-Achse. Es versteht sich jedoch, dass auch andere Befestigungsmöglichkeiten ohne Weiteres denkbar sind, ohne den Rahmen der vorliegenden Erfindung zu verlassen.

Nachfolgend soll auf die für die Erfindung wesentlichen Merkmale und auf die konstruktiven Details des erfindungsgemäßen Schneideinsatzes 10 näher eingegangen werden. Ein zentraler Punkt des erfindungsgemäßen Schneideinsatzes 10 ist in den an den Nebenseitenflächen 18a, b angeordneten ersten Vorsprüngen 24a-d zu sehen. Diese Vorsprünge 24a-d sind jeweils identisch ausgestaltet. Pro Nebenseitenfläche 18a, b sind bei der in den Fig. 1 bis 6 dargestellten ersten Ausführungsform des Schneideinsatzes 10 jeweils zwei erste Vorsprünge 24a-d vorgesehen, welche jeweils in zwei diagonal gegenüberliegenden Ecken der Nebenseitenflächen 18a, b angeordnet sind. Die ersten Vorsprünge 24a, c sind an der Nebenseitenfläche 18a angeordnet. Die ersten Vorsprünge 24b, d sind dagegen an der Nebenseitenfläche 18b angeordnet.

Die ersten Vorsprünge 24a-d dienen im Wesentlichen dazu, die aufgrund der Komplexität des Schneideinsatzaufbaus relativ schwierig zu gewährleistenden Freilaufeigenschaften für die während der jeweiligen Bearbeitung nicht verwendeten Bauteile und Schneidkanten zu garantieren bzw. um Kollisionen zu vermeiden. Im Gegensatz zu einer Verdrehung des Schneideinsatzes 10 in sich, wie dies aus dem Stand der Technik bekannt ist, werden die notwendigen Freiwinkel vorliegend also im Wesentlichen durch die Vorsprünge 24a-d erzeugt. Um die Frei- bzw. Spanwinkel zu erzeugen, sind mehrere komplex geformte Flächen in die Vorsprünge 24a-d eingeformt, welche relativ zu den Hauptachsen (x-, y-, z-Achse) des Schneideinsatzes 10 geneigt sind.

Auf diese Weise lässt sich insbesondere ein erster Freiwinkel α (siehe Fig. 2) und ein zweiter Freiwinkel β (siehe Fig. 3) erzeugen. Der erste Freiwinkel α ist ein Freiwinkel, den eine an den ersten Vorsprüngen 24a-d vorgesehene Fläche mit einer Parallele zur x-Achse einschließt, wie dies in Fig. 2 dargestellt ist. Der zweite Freiwinkel β ist dagegen ein Freiwinkel, den eine an den ersten Vorsprüngen 24a-d vorgesehene Fläche mit einer Parallele zur z-Achse einschließt, wie dies aus Fig. 3 ersichtlich ist. Die durch die ersten Vorsprünge 24a-d erzeugten Freiwinkel α, β entstehen im Wesentlichen an den Nebenschneiden des Schneideinsatzes 10.

Neben den Hauptschneiden 12a-d weist der Schneideinsatz 10 Eckenradien oder Eckenfasen 26a-d auf, welche als erste Teilschneiden 26a-d bezeichnet werden. Die ersten Teilschneiden 26a-d grenzen jeweils an ein erstes Ende 28a-d der Hauptschneiden 12a-d an. Jede geradlinig verlaufende Hauptschneide 12a-d geht also an ihrem jeweiligen ersten Ende 28a-d in eine erste Teilschneiden 26a-d über. Die Hauptschneide12a geht an ihrem ersten Ende 28a in die Teilschneide 26a über; die Hauptschneide 12b geht an ihrem ersten Ende 28b in die erste Teilschneide 26b über; etc.

Jede dieser ersten Teilschneiden 26a-d geht wiederum in eine geradlinig verlaufende Nebenschneide 30a-d über. Die ersten Teilschneiden 26a-d sind also in jeweils zwei gegenüberliegenden Ecken der Hauptseitenflächen 16a, b angeordnet und die Nebenschneiden 30a-d sind angrenzend daran am Übergang zwischen der jeweiligen Hauptseitenfläche 16a, b und der jeweiligen Nebenseitenfläche 18a, b angeordnet. Das heißt, die Nebenschneide 30a ist am Übergang zwischen der Hauptseitenfläche 16a und der Nebenseitenfläche 18a, die Nebenschneide 30b ist am Übergang zwischen der Hauptseitenfläche 16a und der Nebenseitenfläche 18b, die Nebenschneide 30c ist am Übergang zwischen der Hauptseitenfläche 16b und der Nebenseitenfläche 18a, und die Nebenschneide 30d ist am Übergang zwischen der Hauptseitenfläche 16b und der Nebenseitenfläche 18b angeordnet. Die geradlinig verlaufenden Nebenschneiden 30a-d sind, wie dies insbesondere aus den Fig. 1 und 3 ersichtlich ist, kürzer ausgestaltet als die diesen jeweils zugeordneten Hauptschneiden 12a-d. Alle Nebenschneiden 30a-d sind jeweils an einem der ersten Vorsprünge 24a-d angeordnet bzw. grenzen an diese an.

Durch die in die ersten Vorsprünge 24a-d eingeformten Flächen lassen sich also die ersten und zweiten Freiwinkel α, β an den Nebenschneiden 30a-d realisieren. Je nach Ausführungsform können diese Freiwinkel α, β unterschiedlich groß ausgestaltet sein. Vorzugsweise sind diese Freiwinkel α, β im Bereich zwischen 0,5° und 10°, insbesondere im Bereich zwischen 1° und 5°. In einer konkreten Ausführungsform wurde der erste Freiwinkel α mit einer Größe von 3,71° definiert und der zweite Freiwinkel β mit einer Größe von 3,25° definiert. Es versteht sich jedoch, dass auch andere Winkelgrößen denkbar sind, ohne den Rahmen der vorliegenden Erfindung zu verlassen.

Durch die an den Nebenschneiden 30a-d vorgesehenen Freiwinkel α, β ist es möglich, das Werkstück nicht nur mit den Hauptschneiden 12a-d zu bearbeiten, sondern auch über die Ecken des Schneideinsatzes 10 zu bearbeiten. Die Freiwinkel α, β, welche in die Vorsprünge 24a-d eingeformt sind, sorgen dafür, dass es bei einer derartigen Bearbeitung nicht zu unerwünschten Kollisionen mit übrigen Bauteilen des Schneideinsatzes 10 kommt.

Da die notwendigen Freilaufeigenschaften auf diese Weise garantiert sind, ist es im Gegensatz zu den meisten aus dem Stand der Technik bekannten Schneideinsätzen dieser Art möglich, die einzelnen Hauptschneiden 12a, b bzw. 12c, d, die einzelnen ersten Teilschneiden 26a, b bzw. 26c, d sowie die einzelnen Nebenschneiden 30a, b bzw. 30c, d jeweils in einer gemeinsamen Schneidenebene anzuordnen. Die Schneidkanten 12a, b, 26a, b und 30a, b liegen also in derselben Schneidenebene. Genauso liegen auch die Schneidkanten 12c, d, 26c, d und 30c, d in einer gemeinsamen Schneidenebene. Beide genannten Schneidenebenen sind als imaginäre (nicht dargestellte) Ebenen zu verstehen, welche orthogonal zur x-Achse verlaufen. Die Hauptschneiden 12a-d sind also nicht verdreht zueinander, sondern parallel zueinander angeordnet. Sie verlaufen also alle parallel zur y-Achse.

Des Weiteren weist jede Hauptseitenfläche 16a, b des erfindungsgemäßen Schneideinsatzes 10 jeweils eine Hauptanlagefläche 32a, b auf, welche orthogonal zu der x-Achse des Schneideinsatzes 10 ausgerichtet ist und gegenüber der jeweiligen (gedachten) Schneidenebene in Richtung der x-Achse nach innen zur geometrischen Mitte des Schneideinsatzes 10 versetzt ist. Diese Hauptanlageflächen 32a, b dienen, wie der Name schon sagt, als Anlageflächen, mit denen der Schneideinsatz 10 am Werkzeughalter anliegt. Der räumliche Versatz zwischen den Schneidkanten 12a-d und den erwähnten Hauptanlageflächen 32a, b wird am besten aus der in Fig. 6 dargestellten Schnittansicht deutlich.

Durch den räumlichen Versatz der Hauptanlageflächen 32a, b zu den Schneidkanten 12a-d entstehen an jeder Hauptseitenfläche 16a, b des Weiteren jeweils zwei Spanflächen 34a-d (siehe Fig. 6), welche sich jeweils zwischen den Hauptschneiden 12a-d und der Hauptanlagefläche erstrecken und quer, also schräg, zur x-Achse ausgerichtet sind.

Weiterhin weist jede Nebenseitenfläche 18a, b des erfindungsgemäßen Schneideinsatzes 10 eine Nebenanlagefläche 36a, b auf, welche orthogonal zu der y-Achse des Schneideinsatzes 10 verläuft und gegenüber den an der jeweiligen Nebenseitenfläche 18a, b vorgesehenen ersten Vorsprüngen 24a, c bzw. 24b, d in Richtung der y-Achse nach innen zur geometrischen Mitte des Schneideinsatzes 10 versetzt sind. Diese Nebenanlageflächen 36a, b dienen als weitere senkrechte Anlageflächen für die Befestigung des Schneideinsatzes 10 im Plattensitz des Werkzeughalters.

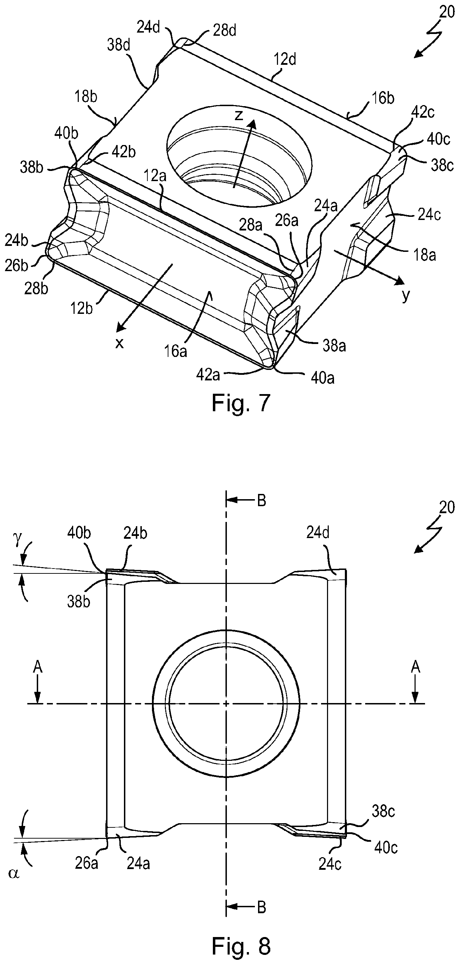

In den Fig. 7 bis 12 ist eine zweite Ausführungsform des erfindungsgemäßen Schneideinsatzes in unterschiedlichen Ansichten dargestellt, wobei diese zweite Ausführungsform gesamthaft mit der Bezugsziffer 20 bezeichnet ist. Mit der ersten Ausführungsform 10 übereinstimmende Bauteile sind darin mit denselben Bezugsziffern bezeichnet bzw. teilweise der Einfachheit halber nicht nochmals neu in den Zeichnungen markiert.

Wie insbesondere aus der in Fig. 7 dargestellten perspektivischen Ansicht des Schneideinsatzes 20 ersichtlich ist, unterscheidet sich die zweite Ausführungsform des Schneideinsatzes 20 von der ersten Ausführungsform des Schneideinsatzes 10 im Wesentlichen dadurch, dass an den Nebenseitenflächen 18a, b jeweils zwei weitere Vorsprünge 38a, c bzw. 38b, d (Vorsprung 38d verdeckt) vorgesehen sind. Diese weiteren Vorsprünge 38a-d werden vorliegend als zweite Vorsprünge bezeichnet. Auch sie befinden sich in zwei diagonal gegenüberliegenden Ecken der jeweiligen Nebenseitenfläche 18a, b. Bei der dargestellten zweiten Ausführungsform des Schneideinsatzes 20 befinden sich also an jeder Nebenseitenfläche 18a, b jeweils zwei erste Vorsprünge 24a, c bzw. 24b, d und jeweils zwei zweite Vorsprünge 38a, c bzw. 38b, d.

Die Anzahl und Form der Hauptschneiden 12a-d wird dadurch nicht verändert. Ebenso bleiben die bereits bezüglich der ersten Ausführungsform des Schneideinsatzes 10 beschriebenen Symmetrieeigenschaften um die x-, y- und z-Achse erhalten.

Auch der Grundgedanke der Erfindung bleibt bei dieser zweiten Ausführungsform erhalten. Auch bei dem Schneideinsatz 20 sind die für die Freilaufeigenschaften der Nebenschneiden notwendigen Freiwinkel jeweils in die an den Nebenseitenflächen 18a, b vorgesehenen Vorsprünge 24a-d bzw. 38a-d eingeformt bzw. werden durch diese definiert. Im Übrigen sind auch bei dem in den Fig. 7 bis 12 dargestellten Schneideinsatz 20 alle Schneidkanten der jeweiligen Hauptseitenfläche 16a, 16b in einer gemeinsamen Ebene angeordnet, welche orthogonal zur x-Achse ausgerichtet ist.

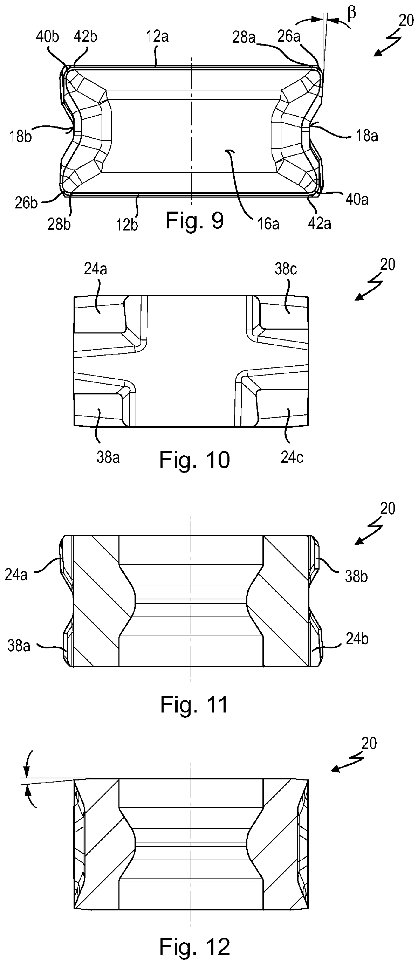

Kurz gesagt besteht der Unterschied also darin, dass der Schneideinsatz 20 insgesamt acht der sogenannten "Nasen" an den Nebenseitenflächen 18a, b aufweist, im Gegensatz zu deren vier, wie dies beim Schneideinsatz 10 gemäß der ersten Ausführungsform (siehe Fig. 1 bis 6) der Fall ist. Wie dies insbesondere aus Fig. 10 ersichtlich ist, sind die ersten Vorsprünge 24a-d dabei größer ausgebildet als die zweiten Vorsprünge 38a-d. Aufgrund dieser zweiten Vorsprünge 38a-d entstehen im Gegensatz zur ersten Ausführungsform (Fig. 1 bis 6) also an jeder Hauptseitenfläche 16a, b zwei Teilschneiden 40a-d, welche als zweite Teilschneiden 40a-d bezeichnet werden. Die zweiten Teilschneiden 40a-d grenzen jeweils an ein zweites Ende 42a-d der jeweiligen Hauptschneide 12a-d an. Somit geht jede Hauptschneide 12a-d an ihrem ersten Ende 28a-d jeweils in eine der ersten Teilschneiden 26a-d über und jeweils an ihrem zweiten Ende 42a-d in eine der zweiten Teilschneiden 40a-d über. Anders ausgedrückt: bei der zweiten Ausführungsform des Schneideinsatzes 20 sind nun alle Ecken und Kanten des Schneideinsatzes 20 mit Eckenradien oder Eckenfasen 26a-d bzw. 40a-d versehen. Die zweiten Teilschneiden 40a-d sind (ähnlich wie die ersten Teilschneiden 26a-d) jeweils an einem der an den Nebenseitenflächen 18a, b des Schneideinsatzes 20 vorgesehenen zweiten Vorsprung 38a-d ausgebildet.

Damit entstehen nun auch an den zweiten Teilschneiden 40a-d (in ähnlicher Weise wie an den ersten Teilschneiden 26a-d) mehrere Freiwinkel. Einer dieser Freiwinkel ist in Fig. 8 mit dem Winkel γ bezeichnet. Der Winkel γ bezeichnet dabei wiederum den an den zweiten Teilschneiden 40a-d entstehenden Freiwinkel, welcher dem auf der anderen Seite jeder Hauptschneide 12a-d an den ersten Teilschneiden 26a-d entstehenden ersten Freiwinkel α entspricht. Aufgrund der Geometrieverhältnisse ist der Winkel γ jedoch vorzugsweise größer ausgestaltet als der Winkel α. Ebenso wie der Winkel α weist der Winkel γ vorzugsweise eine Größe im Bereich von 1°-10° auf, insbesondere im Bereich von 1°-5°.

In einem konkreten Ausführungsbeispiel wurde für den Winkel γ eine Größe von 5° und für den Winkel α eine Größe von 3° gewählt. Es versteht sich jedoch, dass auch andere Winkelgrößen denkbar sind, ohne den Rahmen der vorliegenden Erfindung zu verlassen.

Durch die im Gegensatz zur ersten Ausführungsform nun vorgesehenen in den Ecken des Schneideinsatzes 20 angeordneten weiteren vier Teilschneiden 40a-d kann während der Bearbeitung über die an beiden Enden jeder Hauptschneide 12a-d angeordneten Ecken geschnitten werden. Somit lässt sich die volle Breite der Hauptschneiden 12a-d nahezu komplett ausnutzen und beim Tangentialnutfräsen nicht nur der Nutgrund, sondern gleichzeitig auch die Nutwand in einem Arbeitsgang bearbeiten. Kollisionen sind aufgrund der an den Vorsprüngen 24a-d bzw. 38a-d vorgesehenen Freiwinkel nahezu vollständig ausgeschlossen.

Die Fig. 13 bis 17 zeigen beispielhaft ein erfindungsgemäßes Werkzeug, in dem der erfindungsgemäße Schneideinsatz 10, 20 typischerweise verwendet wird. Das Werkzeug ist in diesen Figuren gesamthaft mit der Bezugsziffer 100 bezeichnet. Das beispielhaft dargestellte Werkzeug ist hierbei als typisches Tangentialfräswerkzeug 100, vorliegend im Speziellen als Schaftfräswerkzeug, dargestellt. Dieses Tangentialfräswerkzeug 100 weist einen Werkzeughalter 44 auf, welcher rotationssymmetrisch um eine Drehachse 46 ist. Am Werkzeughalter 44 ist umfangsseitig mindestens eine, vorzugsweise eine Vielzahl von Schneideinsatzaufnahmen 48 (im Detail in Fig. 13 dargestellt) vorgesehen, welche als Aufnahme für den Schneideinsatz 10 bzw. 20 fungieren. In den Fig. 14 bis 17 ist beispielhaft ein Schneideinsatz 20 der zweiten Ausführungsform in eine der Schneideinsatzaufnahmen 48 eingesetzt. Dieser Schneideinsatz 20 ist vorzugsweise mit einer Schraube 50 am Werkzeughalter 44 lösbar befestigt.

Aus Fig. 13 werden die konstruktiven Details der Schneideinsatzaufnahme 48 ersichtlich. Die Schneideinsatzaufnahme 48 weist jeweils Anlageflächen 52 und 54 auf, an denen der Schneideinsatz 10 bzw. 20 mit seinen Haupt- und Nebenanlageflächen 32a, b bzw. 36a, b am Werkzeughalter 44 anliegt. Eine weitere im Grund der Schneideinsatzaufnahme 48 angeordnete Grundfläche 56 dient als Auflagefläche, auf der der Schneideinsatz 10 bzw. 20 mit seiner jeweiligen Grundflächen 14a oder 14b aufliegt. Die Anlage- und Grundflächen 52, 54, 56 der Schneideinsatzaufnahme 48 sind vorzugsweise orthogonal zueinander ausgestaltet. Auf diese Weise wird ein mechanisch stabiler und eindeutig definierter Plattensitz realisiert.

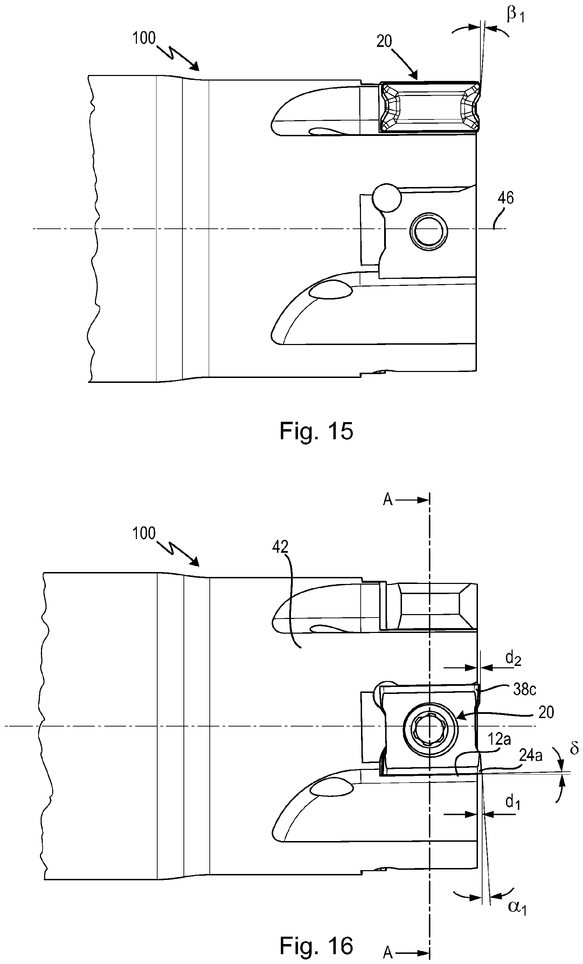

Fig. 16 verdeutlich nochmals die Anordnung des Schneideinsatzes 20 innerhalb des Werkzeughalters 42. An den darin dargestellten Abständen d1 und d2 ist nochmals exemplarisch gezeigt, dass der erste Vorsprung 24a des Schneideinsatzes 20 größer ausgestaltet ist als der zweite Vorsprung 38c (d1 > d2). Ebenso ist daraus ersichtlich, dass der Schneideinsatz 20 um seine z-Achse um einen Winkel δ im Werkzeughalter 42 verdreht angeordnet ist. Dieser Winkel δ wird auch als Axialwinkel bezeichnet. Genauer gesagt ist dies der Winkel, den die zur Bearbeitung verwendete Hauptschneide 12a mit der Axialrichtung des Werkzeughalters 42 einschließt. Da in den ersten Vorsprung 24a des Schneideinsatzes 20 bereits ein Freiwinkel α₁ integriert ist, muss der Axialwinkel bzw. Schneidenverdrehwinkel δ nicht allzu groß ausgestaltet sein, um Kollisionen des Werkstücks mit dem Schneideinsatz, beispielsweise mit dem zweiten Vorsprung 38c, zu vermeiden. Ohne den oben beschriebenen Freiwinkel bzw. ersten Freiwinkel α₁ müsste der Schneidenverdrehwinkel bzw. Axialwinkel δ jedoch wesentlich größer ausgestaltet sein. Es versteht sich, dass sich der Freiwinkel α₁ aufgrund des Axialwinkels δ geringfügig von dem in Fig. 8 dargestellten Winkel α unterscheidet.

Ein möglichst geringer Axialwinkel δ hat den Vorteil, dass es zu einer geringen Konturabweichung am bearbeiteten Werkstück kommt, da der Schneideinsatz nur um einen sehr geringen Winkel im Halter verdreht angeordnet ist. Daher sind insbesondere Axialwinkel δ im Bereich von 0,5° bis 10°, vorzugsweise im Bereich von 1° bis 5°, bevorzugt. In einem konkreten Ausführungsbeispiel wurde der Winkel δ mit 1° bemessen.

Zusammenfassend lässt sich also sagen, dass es den Erfindern gelungen ist, einen alternativen vierschneidigen Tangentialschneideinsatz und ein entsprechendes Werkzeug bereitzustellen, welches aufgrund seiner relativ einfach ausgestalteten Schneidengeometrie kostengünstig zu fertigen ist und dennoch eine hohe Bearbeitungsgenauigkeit aufweist. Im Gegensatz zu den aus dem Stand der Technik bekannten Schneideinsätzen ist der erfindungsgemäße Schneideinsatz nicht in sich verdreht. Die für die Freilaufeigenschaften notwendigen Freiwinkel werden durch sogenannte "Nasen" gebildet, welche an den Nebenseitenflächen des Schneideinsatzes angeordnet sind. Dadurch gelingt es, ohne unerwünschte Kollisionen das Werkstück auch mit den Schneidkantenecken zu bearbeiten.

## Patentansprüche

1. Schneideinsatz für ein Werkzeug zur spanenden Bearbeitung eines Werkstücks, umfassend:
- zwei identische einander gegenüberliegende Grundflächen (14a, b), wobei zumindest ein Teil jeder Grundfläche (14a, b) planar und orthogonal zu einer z-Achse des Schneideinsatzes (10, 20) ist,
- zwei identische einander gegenüberliegende Hauptseitenflächen (16a, b), welche sich zwischen den zwei Grundflächen (14a, b) erstrecken, wobei zumindest ein Teil jeder Hauptseitenfläche (16a, b) planar und orthogonal zu einer x-Achse des Schneideinsatzes (10, 20) ausgerichtet ist, und
- zwei identische einander gegenüberliegende Nebenseitenflächen (18a, b), welche sich ebenfalls zwischen den zwei Grundflächen (14a, b) erstrecken, wobei zumindest ein Teil jeder Nebenseitenfläche (18a, b) planar und orthogonal zu einer y-Achse des Schneideinsatzes (10, 20) ausgerichtet ist,
wobei die x-, y- und die z-Achse orthogonal zueinander ausgerichtete Hauptachsen des Schneideinsatzes (10, 20) sind,
wobei zwischen jeder Grundfläche (14a, b) und jeder Hauptseitenfläche (16a, b) jeweils eine geradlinig verlaufende Hauptschneide (12a-d) vorgesehen ist, und jede Hauptseitenfläche (16a, b) zwei diagonal gegenüberliegende erste Teilschneiden (26a-d) aufweist, weiche jeweils an ein erstes Ende (28a-d) der jeweiligen Hauptschneide (12a-d) angrenzen,
**dadurch gekennzeichnet dass** die Hauptschneiden (12a-d) und die ersten Teilschneiden (26a-d) jeder Hauptseitenfläche (16a, b) jeweils in einer Schneidenebene liegen, welche orthogonal zur x-Achse verläuft,
wobei die ersten Teilschneiden (26a-d) jeweils an einem an den Nebenseitenflächen (18a, b) vorgesehenen ersten Vorsprung (24a-d) ausgebildet sind, der einen ersten Freiwinkel (α) definiert,
wobei sich an jede erste Teilschneide (26a-d) eine geradlinig verlaufende Nebenschneide (30a-d) anschließt, welche am Übergang zwischen der jeweiligen Hauptseitenfläche (16a, b) und der jeweiligen Nebenseitenfläche (18a, b) angeordnet ist; und
wobei jede geradlinig verlaufende Nebenschneide (30a-d) in der jeweiligen Schneidenebene mit einer Parallelen zur z-Achse einen zweiten Freiwinkel (β) einschließt.

2. Schneideinsatz nach Anspruch 1, wobei der Schneideinsatz (10, 20) genau vier identische Hauptschneiden (12a-d) aufweist.

3. Schneideinsatz nach einem der vorstehenden Ansprüche, wobei jede Nebenseitenfläche (18a, b) zwei diagonal gegenüberliegende erste Vorsprünge (24a-d) aufweist, welche in gegenüberliegenden Ecken der jeweiligen Nebenseitenfläche (18a, b) angeordnet sind.

4. Schneideinsatz nach einem der vorstehenden Ansprüche, wobei der Schneideinsatz (10, 20) um die x-Achse, um die y-Achse, als auch um die z-Achse 180° drehsymmetrisch ist.

5. Schneideinsatz nach einem der vorstehenden Ansprüche, wobei jede Hauptseitenfläche (16a, b) ferner zwei diagonal gegenüberliegende zweite Teilschneiden (40a-d) aufweist, welche jeweils an ein zweites Ende (42a-d) der jeweiligen Hauptschneide (12a-d) angrenzen und jeweils an einem an den Nebenseitenflächen (18a, b) vorgesehenen zweiten Vorsprung (38a-d) ausgebildet sind, der einen dritten Freiwinkel (γ) definiert.

6. Schneideinsatz nach Anspruch 5, wobei die ersten Vorsprünge (24a-d) größer ausgestaltet sind als die zweiten Vorsprünge (38a-d).

7. Schneideinsatz nach Anspruch 5, wobei jede Nebenseitenfläche zwei diagonal gegenüberliegende erste Vorsprünge (24a-d) und zwei diagonal gegenüberliegende zweite Vorsprünge (38a-d) aufweist, welche in den Ecken der jeweiligen Nebenseitenfläche (18a, b) angeordnet sind.

8. Schneideinsatz nach einem der vorstehenden Ansprüche, wobei jede Hauptseitenfläche (16a, b) eine Hauptanlagefläche (32a, b) aufweist, welche orthogonal zu der x-Achse des Schneideinsatzes (10, 20) ausgerichtet ist und gegenüber der jeweiligen Schneidenebene in Richtung der x-Achse nach innen zur geometrischen Mitte des Schneideinsatzes (10, 20) versetzt ist.

9. Schneideinsatz nach Anspruch 8, wobei jede Hauptseitenfläche (16a, b) zwei Spanflächen (34a, b) aufweist, welche sich zwischen den Hauptschneiden (12a-d) und der Hauptanlagefläche (32a, b) erstrecken und quer zur x-Achse ausgerichtet sind.

10. Schneideinsatz nach einem der vorstehenden Ansprüche, wobei jede Nebenseitenfläche (18a, b) eine Nebenanlagefläche (36a, b) aufweist, welche orthogonal zu der y-Achse des Schneideinsatzes (10, 20) verläuft und gegenüber den an der jeweiligen Nebenseitenfläche (18a, b) vorgesehenen ersten Vorsprüngen (24a-d) in Richtung der y-Achse nach innen zur geometrischen Mitte des Schneideinsatzes (10, 20) versetzt ist.

11. Schneideinsatz nach einem der vorstehenden Ansprüche, wobei jede erste Teilschneide (26a-d) als Eckenradius oder als Fase ausgebildet ist.

12. Werkzeug zur spanenden Bearbeitung eines Werkstücks, insbesondere zum Tangentialfräsen, mit einem Werkzeughalter (44), welcher mindestens eine Schneideinsatzaufnahme (48) aufweist, in der ein Schneideinsatz (10, 20) nach einem der Ansprüche 1 bis 11 lösbar befestigt ist.

13. Werkzeug nach Anspruch 12, wobei der mindestens eine Schneideinsatz (10, 20) nach einem der Ansprüche 1 bis 11 in der Schneideinsatzaufnahme (48) derart um eine Radialrichtung des Werkzeughalters (44) um einen definierten Schneidenverdrehwinkel (δ) verdreht angeordnet ist, dass die zur Bearbeitung verwendete Hauptschneide (12a-d) diesen Schneidenverdrehwinkel (δ) mit einer Ebene einschließt, welche durch die Radialrichtung und eine Drehachse des Werkzeughalters (44) definiert ist.

## Claims

1. A cutting insert for a tool for machining a workpiece, comprising:
- two identical mutually opposite base surfaces (14a, b), wherein at least a part of each base surface (14a, b) is planar and orthogonal to a z-axis of the cutting insert (10, 20),
- two identical mutually opposite main side surfaces (16a, b) which extend between the two base surfaces (14a, b), wherein at least a part of each main side surface (16a, b) is planar and oriented orthogonally to an x-axis of the cutting insert (10, 20), and
- two identical mutually opposite secondary side surfaces (18a, b) which extend between the two base surfaces (14a, b), wherein at least a part of each secondary side surface (18a, b) is planar and oriented orthogonally to a y-axis of the cutting insert (10, 20),
wherein the x-, y- and z-axes are main axes of the cutting insert (10, 20) that are oriented orthogonally to one another,
wherein between each one of the base surfaces (14a, b) and each one of the main side surfaces (16a, b) a rectilinear main cutting edge (12a-d) is provided, respectively, and wherein each main side surface (16a, b) has two diagonally opposite first segmental cutting edges (26a-d), wherein each first segmental cutting edge (26a-d) adjoins a first end (28a-d) of the respective main cutting edge (12a-d),
**characterized in that** the main cutting edges (12a-d) and the first segmental cutting edges (26a-d) of each main side surface (16a, b) are each located in a cutting edge plane which extends orthogonally to the x-axis,
wherein the first segmental cutting edges (26a-d) are each arranged on a first protrusion (24a-d) which is provided on each of the secondary side surfaces (18a, b)and defines a first clearance angle (α),
wherein a secondary cutting edge (30a-d) that extends in a rectilinear manner adjoins each first segmental cutting edge (26a-d), wherein each secondary cutting edge (30a-d) is arranged at the transition between the respective main side surface (16a, b) and the respective secondary side surface (18a, b); and
wherein each secondary cutting edge (30a-d) encloses a second clearance angle (β) with a parallel to the z-axis in the respective cutting edge plane.

2. The cutting insert as claimed in claim 1, wherein the cutting insert (10, 20) has exactly four identical main cutting edges (12a-d).

3. The cutting insert as claimed in either of the preceding claims, wherein each secondary side surface (18a, b) has two diagonally opposite first protrusions (24a-d) which are arranged in opposite corners of the respective secondary side surface (18a, b).

4. The cutting insert as claimed in one of the preceding claims, wherein the cutting insert (10, 20) has a 180° rotational symmetry about the x-axis, about the y-axis and about the z-axis, respectively.

5. The cutting insert as claimed in one of the preceding claims, wherein each main side surface (16a, b) furthermore has two diagonally opposite second segmental cutting edges (40a-d) which each adjoin a second end (42a-d) of the respective main cutting edge (12a-d) and are each formed on a second protrusion (38a-d) provided on the secondary side surfaces (18a, b), said second protrusion (38a-d) defining a third clearance angle (γ).

6. The cutting insert as claimed in claim 5, wherein the first protrusions (24a-d) are larger than the second protrusions (38a-d).

7. The cutting insert as claimed in claim 5, wherein each secondary side surface has two diagonally opposite first protrusions (24a-d) and two diagonally opposite second protrusions (38a-d) which are arranged in the corners of the respective secondary side surface (18a, b).

8. The cutting insert as claimed in one of the preceding claims, wherein each main side surface (16a, b) has a main bearing surface (32a, b) which is oriented orthogonally to the x-axis of the cutting insert (10, 20) and is offset inwardly in the direction of the x-axis toward the geometric center of the cutting insert (10, 20) with respect to the respective cutting edge plane.

9. The cutting insert as claimed in claim 8, wherein each main side surface (16a, b) has two rake faces (34a, b) which extend between the main cutting edges (12a-d) and the main bearing surface (32a, b) and are oriented transversely to the x-axis.

10. The cutting insert as claimed in one of the preceding claims, wherein each secondary side surface (18a, b) has a secondary bearing surface (36a, b) which extends orthogonally to the y-axis of the cutting insert (10, 20) and is offset inwardly in the direction of the y-axis toward the geometric center of the cutting insert (10, 20) with respect to the first protrusions (24a-d) provided on the respective secondary side surface (18a, b).

11. The cutting insert as claimed in one of the preceding claims, wherein each first segmental cutting edge (26a-d) is provided as a corner radius or bevel.

12. A tool for machining a workpiece, in particular for tangential milling, having a tool holder (44) which has at least one cutting-insert receptacle (48) in which a cutting insert (10, 20) as claimed in one of claims 1 to 11 is releasably fastened.

13. The tool as claimed in claim 12, wherein the at least one cutting insert (10, 20) as claimed in one of claims 1 to 11 is arranged in the cutting-insert receptacle (48) in a manner twisted through a defined cutting edge twist angle (δ) about a radial direction of the tool holder (44), such that the main cutting edge (12a-d) used for machining encloses this cutting edge twist angle (δ) with a plane that is defined by the radial direction and a rotation axis of the tool holder (44).

## Revendications

1. Insert de coupe pour un outil d'usinage d'une pièce par enlèvement de copeaux, comprenant :
- deux surfaces de base (14a, b) identiques opposées l'une à l'autre, au moins une partie de chaque surface de base (14a, b) étant plane et perpendiculaire à un axe z de l'insert de coupe (10, 20),
- deux surfaces latérales principales (16a, b) identiques opposées l'une à l'autre, qui s'étendent entre les deux surfaces de base (14a, b), au moins une partie de chaque surface latérale principale (16a, b) étant plane et orientée perpendiculairement à un axe x de l'insert de coupe (10, 20), et
- deux surfaces latérales secondaires (18a, b) identiques opposées l'une à l'autre, qui s'étendent également entre les deux surfaces de base (14a, b), au moins une partie de chaque surface latérale secondaire (18a, b) étant plane et orientée perpendiculairement à un axe y de l'insert de coupe (10, 20),
les axes x, y et z étant des axes principaux orientés perpendiculairement les uns aux autres de l'insert de coupe (10, 20),
entre chaque surface de base (14a, b) et chaque surface latérale principale (16a, b) étant chaque fois prévue une arête de coupe principale (12a-d) s'étendant en ligne droite et chaque surface latérale principale (16a, b) présentant deux premières arêtes de coupe partielle (26a-d) diagonalement opposées qui sont à chaque fois adjacentes à une première extrémité (28a-d) de l'arête de coupe principale respective (12a-d),
**caractérisé en ce que**
les arêtes de coupe principales (12a-d) et les premières arêtes de coupe partielles (26a-d) de chaque surface latérale principale (16a, b) étant à chaque fois situées dans un plan de coupe qui s'étend perpendiculairement à l'axe x,
les premières arêtes de coupe partielles (26a-d) étant réalisées à chaque fois au niveau d'une première saillie (24a-d) prévue au niveau des surfaces latérales secondaires (18a, b), qui définit un premier angle de dépouille (α),
au niveau de chaque première arête de coupe partielle (26a-d) se raccordant une arête de coupe secondaire (30a-d) s'étendant en ligne droite, qui est disposée au niveau de la transition entre la surface latérale principale respective (16a, b) et la surface latérale secondaire respective (18a, b) ; et
chaque arête coupe secondaire (30a-d) s'étendant en ligne droite dans le plan de coupe respectif formant avec une parallèle à l'axe z un deuxième angle de dépouille (β).

2. Insert de coupe selon la revendication 1, l'insert de coupe (10, 20) présentant exactement quatre arêtes de coupe principales identiques (12a-d).

3. Insert de coupe selon l'une quelconque des revendications précédentes, dans lequel chaque surface latérale secondaire (18a, b) présente deux premières saillies (24ad) diagonalement opposées qui sont disposées dans des coins opposés de la surface latérale secondaire respective (18a, b).

4. Insert de coupe selon l'une quelconque des revendications précédentes, dans lequel l'insert de coupe (10, 20) présente une symétrie de révolution de 180° autour de l'axe x, de l'axe y ainsi qu'autour de l'axe z.

5. Insert de coupe selon l'une quelconque des revendications précédentes, dans lequel chaque surface latérale principale (16a, b) présente en outre deux deuxièmes arêtes de coupe secondaires (40a-d) diagonalement opposées qui sont à chaque fois adjacentes à une deuxième extrémité (42a-d) de l'arête de coupe principale respective (12a-d) et qui sont à chaque fois réalisées au niveau d'une deuxième saillie (38a-d) prévue au niveau des surfaces latérales secondaires (18a, b), qui définit un troisième angle de dépouille (y).

6. Insert de coupe selon la revendication 5, dans lequel les premières saillies (24a-d) sont configurées de manière à être plus grandes que les deuxièmes saillies (38a-d).

7. Insert de coupe selon la revendication 5, dans lequel chaque surface latérale secondaire présente deux premières saillies (24a-d) diagonalement opposées et deux deuxièmes saillies (38a-d) diagonalement opposées, qui sont disposées dans les coins de la surface latérale secondaire respective (18a, b).

8. Insert de coupe selon l'une quelconque des revendications précédentes, dans lequel chaque surface latérale principale (16a, b) présente une surface d'appui principale (32a, b) qui est orientée perpendiculairement à l'axe x de l'insert de coupe (10, 20) et qui est décalée par rapport au plan de coupe respectif dans la direction de l'axe x vers l'intérieur vers le centre géométrique de l'insert de coupe (10, 20).

9. Insert de coupe selon la revendication 8, dans lequel chaque surface latérale principale (16a, b) présente deux surfaces d'enlèvement de copeaux (34a, b) qui s'étendent entre les arêtes de coupe principales (12a-d) et la surface d'appui principale (32a, b) et qui sont orientées transversalement par rapport à l'axe x.

10. Insert de coupe selon l'une quelconque des revendications précédentes, dans lequel chaque surface latérale secondaire (18a, b) présente une surface d'appui secondaire (36a, b) qui s'étend perpendiculairement à l'axe y de l'insert de coupe (10, 20) et qui est décalée par rapport aux premières saillies (24a-d) prévues au niveau de la surface latérale secondaire respective (18a, b) dans la direction de l'axe y vers l'intérieur vers le centre géométrique de l'insert de coupe (10, 20).

11. Insert de coupe selon l'une quelconque des revendications précédentes, dans lequel chaque première arête de coupe partielle (26a-d) est réalisée sous forme de rayon d'angle ou de biseau.

12. Outil pour l'usinage de pièces par enlèvement de copeaux, en particulier pour le fraisage tangentiel, comprenant un porte-outil (44) qui présente au moins un logement d'insert de coupe (48) dans lequel peut être fixé de manière amovible un insert de coupe (10, 20) selon l'une quelconque des revendications 1 à 11.

13. Outil selon la revendication 12, dans lequel l'au moins un insert de coupe (10, 20) selon l'une quelconque des revendications 1 à 11 est disposé dans le logement d'insert de coupe (48) de manière tournée autour d'une direction radiale du porte-outil (44) autour d'un angle de rotation de l'arête de coupe (δ) de telle sorte que l'arête de coupe principale (12a-d) utilisée pour l'usinage forme cet angle de rotation d'arête de coupe (δ) avec un plan qui est défini par la direction radiale et par un axe de rotation du porte-outil (44).
